# EUROPÄISCHE PATENTSCHRIFT

(11) **EP 1 540 433 B1**
(45) Veröffentlichungstag und Bekanntmachung des Hinweises auf die Patenterteilung: **23.04.2008**
(21) Anmeldenummer: 03747825.2
(22) Anmeldetag: 01.09.2003
(51) Int. Cl.: G05B 19/418

(54) **SYSTEM ZUR VIRTUELLEN PROZESSANBINDUNG ÜBER REMOTE DESKTOP PROTOCOL (RDP)**
SYSTEM FOR VIRTUAL PROCESS INTERFACING VIA A REMOTE DESKTOP PROTOCOL (RDP)
SYSTEME DE LIAISON DE PROCESSUS VIRTUELLE PAR L'INTERMEDIAIRE D'UN PROTOCOLE RDP (REMOTE DESKTOP PROTOCOL)

(30) Priorität: 16.09.2002 DE 10242919
(43) Veröffentlichungstag der Anmeldung: 15.06.2005
(73) Patentinhaber: SIEMENS AKTIENGESELLSCHAFT, 80333 München (DE)
(72) Erfinder: BANIK, Thomas, 91058 Erlangen (DE); GERLACH, Hendrik, 91058 Erlangen (DE); TRÖSTER, Thomas, 91723 Dittenheim (DE); VOLKMANN, Frank, 90475 Nürnberg (DE); LIST, Stefan, 90766 Fürth (DE); TALANIS, Thomas, 91336 Heroldsbach (DE)
(86) Internationale Anmeldenummer: PCT/DE2003/002888
(87) Internationale Veröffentlichungsnummer: WO 2004/027598

(56) Entgegenhaltungen:
- US-A- 5 309 351
- US-A- 5 960 214
- US-A- 6 067 477
- US-A1- 2002 114 433

## Beschreibung

Die Erfindung betrifft ein System zur Prozessanbindung im Automatisierungsumfeld für verteilte Engineering-Systeme mit einem Server zur Bereitstellung mindestens einer für das Engineering benötigten Anwendung, mindestens einem Client zum Zugriff auf Prozess- und/oder Projektierungsdaten liefernde Automatisierungsgeräte und zum Aufbau eines für eine beliebige Dauer bestehenden Online-Kommunikationskanals zwischen dem Client und dem Server, wobei die Anwendungen vom Client online nutzbar sind. Des Weiteren betrifft die Erfindung ein Verfahren zur Prozessanbindung im Automatisierungsumfeld für verteilte Engineering-Systeme sowie einen Server und einen Client.

Heutige Engineering-Systeme in der Automatisierungstechnik sind in der Regel sogenannte monolithische Systeme, die nicht die Möglichkeit eines verteilten Engineerings bzw. eines verteilten Projektierens bieten. Da Anlagen sowie Automatisierungssysteme jedoch immer komplexer und weitläufiger werden, wird der Zugriff auf Prozess- und Diagnosedaten sowie Projektierdaten für das Engineering von beliebiger Stelle innerhalb der Anlage bzw. des Automatisierungssystems aus gewünscht. Hierzu werden heutzutage sogenannte Terminalserverlösungen auf Basis des Transports von Bilddaten (Bitmaps) vom Server zum Client verwendet, wobei Tastatur und Mausaktionen vom Client zum Server übermittelt werden. Es ist jedoch nicht möglich, über ein zentrales Engineering-System auf beliebige Online-Daten, d.h. solche Daten, die auf der jeweiligen CPU eines in der Peripherie existierenden Clients, wie beispielsweise ein Operator Panel oder ein Programmiergerät, zuzugreifen. Ebenso sind Projektierungsdaten, die auf einem derartigen Client gespeichert sind, für das Engineering-System nicht direkt verfügbar.

Aus der US 2002/0114433 A1 ist ein Verfahren zur Überwachung und Steuerung einer Maschine bekannt, bei dem zwischen der Maschine und einem Überwachungs- bzw. Diagnosegerät mit Hilfe eines mobilen Gerätes, wie z.B. einem Mobiltelefon, ein Kommunikationskanal aufgebaut wird, über den das Überwachungsgerät Diagnoseinformationen aus der Maschine auslesen kann.

Aus der US 6,067,477 A ist ein System zum Steuern und Überwachen technischer Prozesse bekannt, bei dem von verschiedenen Clients aus über einen Server auf verschiedene unternehmensweite Echtzeitanwendungen und -systeme zugegriffen werden kann.

Aus der US 5,309,351 A ist ein Kommunikationssystem bekannt, bei dem ein Client in Form eines mobilen Gerätes über eine Infrarotverbindung mit einen Host Computer verbunden ist. Darüber hinaus sind der Host Computer sowie der Client jeweils an Automatisierungsgeräte in Form von Steuerungsprozessoren einer Fabrikanlage angebunden.

Der Erfindung liegt die Aufgabe zugrunde, eine Möglichkeit zu schaffen, ein auf einem Server installiertes Engineering-System von verschiedenen Standorten aus bedienen sowie variabel und flexibel an beliebige Automatisierungsgeräte anbinden zu können.

Diese Aufgabe wird für ein System zur Prozessanbindung im Automatisierungsumfeld für verteilte Engineering-Systeme mit einem Server zur Bereitstellung mindestens einer für das Engineering benötigten Anwendung, mindestens einem Client zum Zugriff auf Prozess- und/oder Projektierungsdaten liefernde Automatisierungsgeräte und zum Aufbau eines für eine beliebige Dauer bestehenden Online-Kommunikationskanals zwischen dem Client und dem Server, wobei die Anwendungen vom Client online nutzbar sind, dadurch gelöst, dass das System erste Mittel zum Einschleusen von Daten der Automatisierungsgeräte über den Kommunikationskanal auf den Server und zweite Mittel auf dem Client zum Anbinden der Anwendungen an die Automatisierungsgeräte aufweist, wobei die ersten Mittel über eine erste Schnittstelle zum Kommunikationskanal und über eine zweite Schnittstelle zu den Anwendungen verfügen sowie - zur Kommunikation mit den zweiten Mitteln (7) über den Kommunikationskanal (8), - zum Routing von Daten weiterer Automatisierungsgeräte (5a), die über mindestens einen weiteren Client (4a) sowie einen zweiten Kommunikationskanal (8a) auf den Server (2) eingeschleust werden, zu dem Client (4) vorgesehen sind.

Der Erfindung liegt die Erkenntnis zugrunde, dass die heutzutage für das Engineering im Automatisierungsumfeld verwendeten Engineering-Systeme in der Regel monolithisch sind, d.h. sie sind auf einem zentralen Server installiert und können nur dort bedient werden. Auf modernen Anlagen, die sich durch immer höhere Komplexität, Heterogenität und eine Dezentralisation auszeichnen, ist es jedoch von Vorteil, wenn die Engineering-Systeme von unterschiedlichen Orten bzw. Standorten aus bedient werden können, und von diesen Orten auf beliebige Prozess- bzw. Projektierdaten zugegriffen werden kann. Hierzu wird in der vorgeschlagenen Erfindung eine virtuelle Prozessanbindung, welche über einen Online-Kommunikationskanal erfolgt, vom Engineering-System auf einem Server zu beliebigen Automatisierungsgeräten, welche über Clients angesprochen werden können, aufgebaut. Das vorgeschlagene System ermöglicht somit die Bedienung eines Engineerungs-Systems inklusive Zugriff auf Prozess- sowie Diagnosedaten von einem beliebigen Ort innerhalb des Systems. Vorteilhaft ist hierbei vor allem die Optimierung des Ressourceneinsatzes auf der Anlage innerhalb des Automatisierungssystems. Bei den verwendeten Clients kann es sich beispielsweise um Thin Clients handeln, da auf ihnen selbst keine Applikationen laufen müssen. Die Applikationen werden vielmehr auf dem Server installiert, über den Client können sie aber von Ferne online genutzt werden und die benötigten Daten stehen durch den Kommunikationskanal ebenfalls zur Verfügung. Ein Engineering kann somit wesentlich variabler und flexibler durchgeführt werden. Die virtuelle Prozessanbindung über den Online-Datenkanal ermöglicht ein verteiltes Engineering auch in monolithischen Systemen. Der Anwender benötigt für den Datenzugang und das Engineering nur einen Online-Zugang. Vom Client aus kann das System dann bedient werden. Das Engineering-System selbst muss nicht auf dem Rechner liegen, den der Anwendung benutzt. Der Online-Zugang zu den Automatisierungsgeräten wird durch sogenanntes Tunneling von Kommunikationsdatenpaketen durch den Kommunikationskanal hergestellt.

Die Erfindung ist dadurch gekennzeichnet, dass die ersten Mittel zum Einschleusen von Daten weiterer Automatisierungsgeräte über mindestens einen weiteren Client über den Kommunikationskanal auf den Server vorgesehen sind. Diese Ausbildung der Erfindung ermöglicht es, von einem beliebigen Client aus auf Automatisierungsgeräte, welche an einen anderen beliebigen Client innerhalb des Systems angeschlossen sind und auf die relevanten Daten dieser Automatisierungsgeräte zugreifen zu können. Hierzu wird auf dem Server ein Routing vorgenommen, so dass eine virtuelle peer-2-peer-Kommunikation (direkte Kommunikation) zwischen den beteiligten Clients ermöglicht wird. Zugriffs- und Konfigurationsmöglichkeiten von einem Clientsystem zu einem anderen Clientsystem werden dadurch realisiert. An jeder Stelle innerhalb des Systems sind somit beliebige Prozess- bzw. Diagnosedaten verfügbar, die an einer anderen Stelle innerhalb des Systems gespeichert sind bzw. entstehen.

Eine weitere vorteilhafte Ausbildung der Erfindung ist dadurch gekennzeichnet, dass der Client als Programmiergerät und/oder als Operator Panel und/oder als Diagnosegerät und/ oder als Browser und/oder als Windows-Ce-Gerät ausgebildet ist. Vorteilhaft ist hierbei vor allem, dass beliebige, auf einer Anlage vorhandene Geräte, die generell zum Beobachten und Bedienen der Anlage bzw. des Automatisierungssystems heutzutage bereits verwendet werden, im vorgeschlagenen erfindungsgemäßen System zur Bedienung ebenfalls herangezogen werden können. Über ein herkömmliches Programmiergerät oder ein Operator Panel können beispielsweise die entsprechenden Steuerungsdaten bzw. Diagnosedaten der Automatisierungsgeräte an den Server über das Kommunikationssystem übertragen werden und stehen dem Engineering-System auf dem Server somit zur Verfügung. Das Engineering selbst kann wiederum direkt von den vorgeschlagenen Clients aus durchgeführt werden.

Eine weitere vorteilhafte Ausbildung der Erfindung ist dadurch gekennzeichnet, dass der Server als Terminal-Server zur simultanen Nutzung durch ein und/oder mehrere Teilnehmer ausgebildet ist. Der Server bzw. das vorgeschlagene System ist also multiuserfähig, und es können gleichzeitig mehrere Benutzer Engineeringarbeiten, für die sie auf Prozess- bzw. Diagnosedaten zurückgreifen müssen, innerhalb des Systems vornehmen.

Eine weitere vorteilhafte Ausbildung der Erfindung ist dadurch gekennzeichnet, dass der Kommunikationskanal als Remote Desktop Protocol zur Übertragung von Daten in Echtzeit über einen und/oder mehrere separate virtuelle Kanäle an einen und/oder mehrere Teilnehmer ausbildet ist. Die Nutzung des Remote Desktop Protocols (RDP) von Microsoft ermöglicht ein effizientes und zügiges Versenden von Datenpaketen über den Kommunikationskanal zwischen einem Client und dem Server, was das Engineering und den Zugriff auf die Prozess- bzw. Projektierungsdaten erheblich verbessert. Außerdem können mehrere Datenpakete von mehreren Benutzern des Systems gleichzeitig und unabhängig voneinander über den Kommunikationskanal versendet werden, ohne dass es zu Interaktionen mit negativen Konsequenzen kommt. Die Möglichkeit, mehrere separate virtuelle Kanäle für den Datentransfer zu nutzen bewirkt zudem, dass das System variabel, flexibel und frei skalierbar ist. Es können beliebig viele Benutzer (begrenzt durch die Kapazitäten des Servers) gleichzeitig innerhalb des Systems an unterschiedlichen Clients arbeiten.

Eine weitere vorteilhafte Ausbildung der Erfindung ist dadurch gekennzeichnet, dass die Übertragung von Daten im Kommunikationskanal über ein Intranet und/oder ein Internet vorgesehen ist. Für das vorgeschlagene System müssen somit keine eigenen Infrastrukturen, wie speziellen Netzwerke aufgebaut werden. Das standardmäßig vorhandene Intranet bzw. Internet kann genutzt werden und die dortigen Standardprotokolle stehen für die Kommunikation ebenfalls zur Verfügung. Dies ermöglicht eine kostengünstige Umsetzung des erfindungsgemäßen Systems ohne weitere Aufwendungen.

Eine weitere vorteilhafte Ausbildung der Erfindung ist dadurch gekennzeichnet, dass die Übertragung von Daten vom Client per Remote Desktop Protocol über Wireless LAN (W-LAN) vorgesehen ist. Die innerhalb des Systems verwendeten Clients wie beispielsweise Programmiergeräte, Operator Panels, Diagnosegeräte oder beliebige Browser müssen nicht direkt über einen Kabelanschluss verfügen. Die Datenübertragung kann vielmehr schnurlos über ein W-LAN Netz erfolgen. Die Nutzung solche Netze hat den Vorteil, dass ein Anwender sich nicht statisch an einem Ort aufhalten muss, sondern sich mit seinem Client nur in einem bestimmten Bereich bzw. einem Umfeld, in welchem er Daten mittels W-LAN übertragen kann, aufhalten muss. Die Nutzung des W-LAN ermöglicht somit eine höhere Mobilität der Benutzer bzw. Anwender auf der Anlage.

Eine weitere vorteilhafte Ausbildung der Erfindung ist dadurch gekennzeichnet, dass die Übertragung von Daten per Remote Desktop Protocol von weiteren, im System vorhandenen Datenquellen über weitere Standard-Protokolle wie HTTP und/oder FTP vorgesehen ist. Daten, welche über andere Kommunikationsverfahren und Netze in das System gelangen, können somit innerhalb des Systems über die gleichen Kommunikationskanäle versendet werden. Sie stehen einem beliebigen Anwender somit ebenso zur Verfügung, wie die Daten der Automatisierungsgeräte, welche mit den Clients verbunden sind. Ein universeller Zugriff auf sämtliche relevanten Daten für die Anlage bzw. das Automatisierungssystem wird somit gewährleistet.

Eine weitere vorteilhafte Ausbildung der Erfindung ist dadurch gekennzeichnet, dass das System zur Nutzung über verschiedene Standorte hinweg vorgesehen ist. Ein verteiltes Engineering mittels virtuellem Zugriff auf Prozessdaten und Projektierungsdaten ist somit nicht nur an einem Standort innerhalb einer Anlage möglich, es wird vielmehr auch ein standortübergreifender Zugriff auf sämtliche relevanten Daten möglich. Das vorgeschlagene System eignet sich somit hervorragend für das Engineering von dezentralen Automatisierungssystemen. Hierbei ist vor allem von Vorteil, dass die verwendeten Clients einfach sein können und über wenige Ressourcen verfügen müssen. Die Anwendungen werden direkt vom Server zur Verfügung gestellt. Außerdem wird durch eine standortübergreifende Zugriffsmöglichkeit auf Projektierungs- und Prozessdaten auch eine Fernwartung bzw. Diagnose möglich. Experten, die unter Umständen nicht direkt vor Ort sind, können über das verteilte System von beliebiger Stelle aus auf die relevanten Daten zugreifen.

Im Folgenden wird die Erfindung anhand der in den Figuren dargestellten Ausführungsbeispiele näher beschrieben und erläutert. Es zeigen:
- FIG 1: eine schematische Darstellung des Systems zur virtuellen Online-Prozessanbindung im Automatisierungsumfeld,
- FIG 2: eine schematische Darstellung der Zugriffs- und Konfigurationsmöglichkeiten zwischen zwei Clients innerhalb des Systems,
- FIG 3: eine schematische Darstellung der Kommunikation innerhalb des Systems über verschiedene Standorte mittels Intranet/Internet.

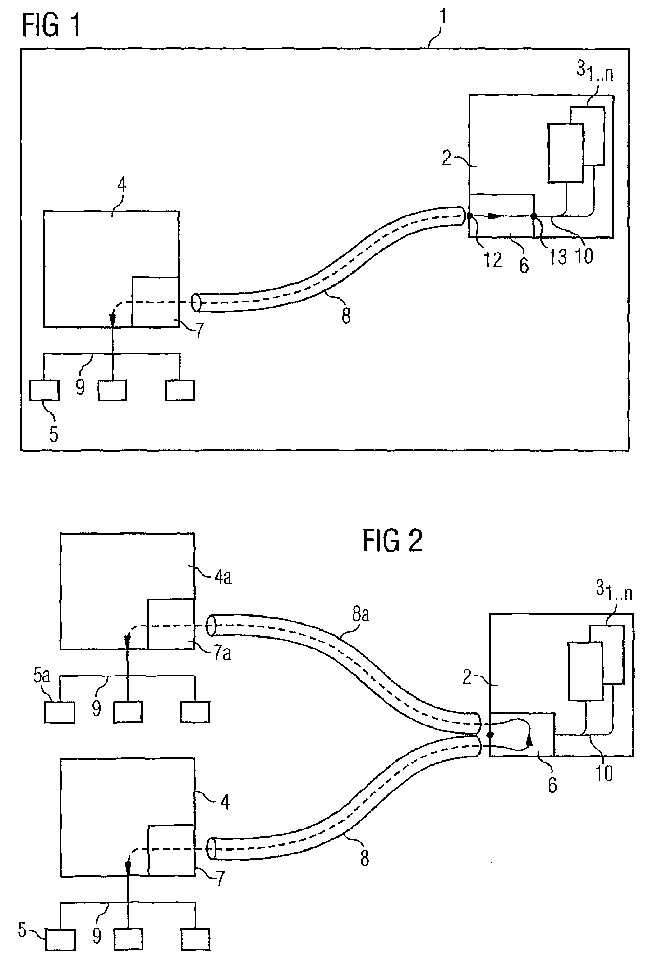

Figur 1 zeigt eine schematische Darstellung eines Ausführungsbeispiels des Systems 1 zur virtuellen Prozessanbindung im Automatisierungsumfeld für verteiltes Engineering auf monolithischen Systemen. Hierbei werden für das Engineering benötigte Anwendungen bzw. Applikationen 3_{1..n} auf einem zentralen Server 2 innerhalb des Systems 1 gespeichert und zur Verfügung gestellt. Im Automatisierungsumfeld vorhandene Automatisierungsgeräte 5 sind über eine Datenübertragungsvorrichtung 9, beispielsweise ein Bussystem, mit einem Client 4 verbunden. Vom Client kann direkt auf die Daten der Automatisierungsgeräte 5 zugegriffen werden. Die Kommunikation zwischen dem Terminalserver 2 und dem Client 4 zur Online-Prozessanbindung wird mit Hilfe des Kommunikationskanals 8 realisiert. Hierbei wird ein sogenanntes Remote Desktop Protocol verwendet, welches das Versenden von Datenpaketen über virtuelle Kanäle online ermöglicht. Durch den Datenkanal 8 wird Zugriff auf die Online-Daten der Automatisierungsgeräte durch den Terminalserver 2 ermöglicht. Hierzu befinden sich auf dem Terminalserver Mittel 6 zum Einschleusen von Daten der Automatisierungsgeräte 5 über den Kommunikationskanal 8. In der Regel handelt es sich hierbei um eine Software, die auf dem Terminalserver 2 läuft, und dafür sorgt, dass der Server 2 automatisch zu dem Automatisierungsgerät 5 des entsprechenden Client 4 umgeleitet wird. Die Software besitzt zwei Schnittstellen, erstens zur Kommunikation mit dem Kommunikationskanal 8 und zweitens mit den Applikationen 3_{1..n}. Zweite Mittel 7 auf dem Client 4 sorgen für eine Anbindung der Anwendungen 3_{1..n} an die jeweiligen Automatisierungsgeräte 5.

Die Besonderheit des in Figur 1 beispielhaft dargestellten Systems 1 besteht darin, dass Prozess- und Diagnosedaten von Automatisierungsgeräten 5 durch einen Datenübertragungskanal 8 auf einem Terminalserver 2 jederzeit in Echtzeit verfügbar gemacht werden können. Hierzu wird vom Client 4 eine Online-Datenverbindung über ein sogenanntes Remote Desktop Protocol aufgebaut. Die Mittel 7 zum Anbinden der Anwendungen 3_{1..n} vom Server 2 an die Automatisierungsgeräte 5 sind hierbei als Softwarekomponente in Form einer sogenannten Online-RDP-Proxy realisiert. Die Online-RDP-Proxy sorgt für die Anbindung des Engineering-Systems an die jeweiligen Automatisierungsgeräte 5. Weitere Mittel 6 zum Einschleusen von Daten der Automatisierungsgeräte 5 über den Kommunikationskanal 8 sind auf dem Server 2 realisiert. Sie sind in Form einer Software, einer sogenannten Online-RDP-DLL realisiert. Diese Online-RDP-DLL findet den entsprechenden Online-RDP-Proxi und die Daten der Automatisierungsgeräte 5 werden dann über den Kommunikationskanal 8 übertragen. Bei der Übertragung mittels Remote Desktop Protocol handelt es sich um die Nutzung eines Standardprotokolls, welches die Echtzeitversendung von Daten einer Applikation an mehrere Nutzer über mehrere virtuelle Kanäle ermöglicht. Hierbei werden die Daten individuell für jede "session" (Arbeitsdauer des jeweiligen Nutzers) übertragen. Die Datenübertragung über das Protokoll erfolgt hierbei in sogenannten Datenpaketen, die einzeln verschlüsselt, verpackt und mit einer Adresse des Empfängers versendet werden. Die Spezifität beim Versenden über das Remote Desktop Protocol besteht darin, dass ein sogenanntes Tunneling erfolgt. Die Anwender bzw. der Server 2 und der Client 4 sind nicht in das eigentliche Versenden der Daten involviert. Die Datentransformation erfolgt vielmehr im Rahmen des RDP-Protokolls. Vom Client muss ausschließlich eine Online-Verbindung zum Server aufgebaut werden. Die Online-RDP-DLL auf dem Server 2 sowie die Online-RDP-Proxy auf dem Client 4 sind ausschließlich für die Bereitstellung der Daten und das Ausmachen der richtigen Adresse, an welche die Daten gesendet werden sollen, verantwortlich. Der Vorteil bei einer derartigen Datenübertragung über ein Online-RDP-Standardprotokoll besteht vor allem darin, dass eine vorhandene Infrastruktur, wie beispielsweise das Internet, für die Datenübertragung genutzt werden kann. Eine Verlegung von Kabeln oder anderen Datenübertragungsvorrichtungen innerhalb des Systems 1 erübrigt sich. Somit kann die Datenübertragung auf kostengünstige Weise realisiert werden. Außerdem ist eine Übertragung von Prozess- bzw. Diagnosedaten in Echtzeit möglich. Des Weiteren können spezifische Anwendungen 3_{1..n}, welche auf einem Server 2 zur Verfügung gestellt werden, von beliebigen Clients 4 innerhalb des Systems 1 genutzt werden. Ein Anwender kann somit beispielsweise auf einem Programmiergerät direkt vor Ort ein Engineering-System nutzen und ihm stehen gleichzeitig sämtliche Prozessdaten bzw. Diagnosedaten der Automatisierungsgeräte 5 zur Verfügung. Der verwendete Client kann hierbei ein sogenannter Thin Client sein, bei dem es sich beispielsweise ausschließlich um einen Browser handelt. Der Client holt sich jeweils die benötigte Applikation 3ᵢ für die auszuführende Tätigkeit vom Server 2. Vor Ort kann also beispielsweise von einem Benutzer mit einem Engineering-System, wie einem Step 7, gearbeitet werden.

Figur 2 zeigt eine beispielhafte Ausbildung des Systems 1, bei dem von einem Client 4 auf Prozessdaten von Automatisierungsgeräten 5a zugegriffen wird, welche über ein Datenübertragungssystem 9 an einen weiteren Client 4a angeschlossen sind. Die Datenübertragung erfolgt hierbei über den Kommunikationskanal 8 sowie den Kommunikationskanal 8a. Durch die Mittel 6 zum Einschleusen von Daten der Automatisierungsgeräte 5 wird ein zweiter Kommunikationskanal 8a zwischen dem Terminalserver 2 und dem zweiten Client 4a aufgebaut. Die Datenübertragung erfolgt dann vom Client 4a über den Terminalserver 2 zum Client 4. Von der Online-RDP-DLL 6 auf dem Server 2 wird also ein Routing, d.h. eine Weiterleitung der entsprechenden Datenpakete an den Client 4 und vom Client 4a durchgeführt. Somit wird eine quasi p2p-Verbindung zwischen den beteiligten Clients 4 und 4a etabliert.

Vorteilhaft ist in dem erfindungsgemäßen Beispiel vor allem, dass von einem Benutzer auf einer Anlage über einen beliebigen Client 4 der Zugriff auf beliebige Prozessdaten, welche von weiteren Automatisierungsgeräten 5a auf die der Client 4 keinen direkten Zugriff hat, über die virtuelle Prozessanbindung mittels der Online-RDP-Datenübertragung über den Kommunikationskanal 8 ermöglicht wird. Sämtliche Daten sind somit an jedem Ort innerhalb des Systems 1 für einen Benutzer zur Verfügung bereit. Durch das System 1 wird ein ausgesprochen variables und flexibles Engineering für den Benutzer möglich. Sowohl Anwendungen als auch Prozessdaten stehen über die virtuelle Prozessanbindung an jeder Stelle innerhalb des Systems 1 zur Verfügung.

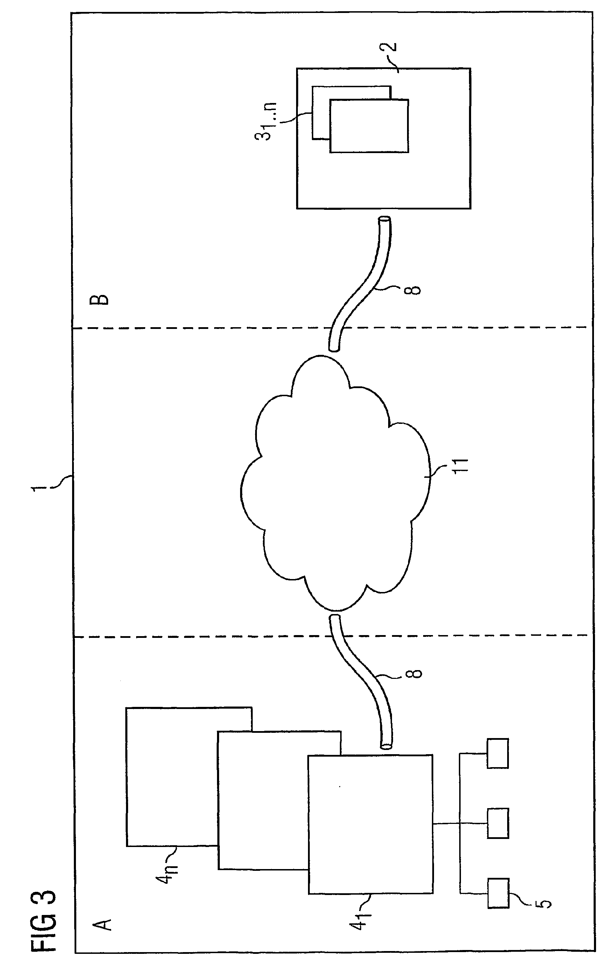

Figur 3 zeigt eine beispielhafte Ausbildung des Systems 1, wobei die Prozess- bzw. Diagnosedaten über ein Internet bzw. Intranet 11 übertragen werden. Hierzu sind die Clients 4_{1...n} mittels Online-RDP-Protokoll, über welches ein Kommunikationskanal 8 aufgebaut wird, an das Internet bzw. Intranet 11 angebunden. Der Terminalserver 2 verfügt ebenfalls über den Kommunikationskanal 8 über eine Internetanbindung.

Der Vorteil der in Figur 3 dargestellten Ausbildung des Systems 1 besteht im wesentlichen darin, dass standortunabhängig über verschiedene Lokalitäten (A,B,C), die weit voneinander entfernt sein können, auf Daten, sowohl Prozess- als auch Diagnosedaten innerhalb des Systems 1 zugegriffen werden kann. Bei der heutzutage vorherrschenden heterogenen Struktur von Automatisierungssystemen in Prozess- und Produktionsanlagen ist die Nutzung des vorgeschlagenen Systems 1 somit von großem Vorteil. Ein Engineering sowie Information und Wartung kann von unterschiedlichen Orten im System 1 aus vorgenommen werden, da alle Daten über die Online-RDP-Kommunikationskanäle 8 und das Internet 11 jederzeit überall in Echtzeit zur Verfügung stehen. Eine virtuelle Prozessanbindung der beteiligten Einheiten innerhalb des Systems 1 ist somit jederzeit gegeben. Ein verteiltes Engineering wird hierdurch auch in heute vorherrschenden monolithischen Systemen bzw. Anwendungen möglich. Vorteilhaft ist hierbei auch, dass das System 1 frei skalierbar ist. Neue Automatisierungsgeräte 5 können jederzeit über einen einfachen Client 4ᵢ, beispielsweise einen Thin clinet an das System angeschlossen werden. Die einzige Voraussetzung ist ein Online-Zugang. Dieser kann heutzutage sogar ohne Verlegung von Kabeln über ein W-Lan realisiert werden. Ist so ein W-Lan innerhalb eines bestimmten Umfeldes vorhanden, so können die Daten auch jederzeit in Echtzeit auf mobilen Clients 4_{1 ...}n zur Verfügung gestellt werden.

Die Erfindung betrifft zusammenfassend ein System 1 und ein verfahren zur virtuellen Online-Prozessanbindung für verteilte Engineering-Systeme in der Automatisierungstechnik auf der Basis von Remote Desktop Protocol (RDP). Über einen Online Zugang wird von beliebigen Clients 4 innerhalb des Systems 1 ein Kommunikationskanal 8 über das RDP zu einem Server 2 aufgebaut. Prozess- und Projektierungsdaten werden über den Kanal 8 getunnelt. Eine quasi peer-to-peer-Kommunikation zwischen beliebigen Clients 4 im System 1 wird durch routing auf dem Server 2 ermöglicht.

## Patentansprüche

1. System (1) zur Prozessanbindung im Automatisierungsumfeld für verteilte Engineering-Systeme mit
- einem Server (2) zur Bereitstellung mindestens einer für das Engineering benötigten Anwendung (3_{1..n}),
- mindestens einem Client (4) zum
- Zugriff auf Prozess- und/oder Projektierungsdaten liefernde Automatisierungsgeräte (5) und
- zum Aufbau eines für eine beliebige Dauer bestehenden Online-Kommunikationskanals (8) zwischen dem Client (4) und dem Server (2), wobei die Anwendungen (3_{1..n}) vom Client (4) online nutzbar sind,
**gekennzeichnet durch**
- erste Mittel (6) zum Einschleusen von Daten der Automatisierungsgeräte (5) über den Kommunikationskanal (8) auf den Server (2) und
- zweite Mittel (7) auf dem Client (4) zum Anbinden der Anwendungen (3_{1..n}) an die Automatisierungsgeräte (5),
- wobei die ersten Mittel (6)
- über eine erste Schnittstelle (12) zum Kommunikationskanal (8) und
- über eine zweite Schnittstelle (13) zu den Anwendungen (3_{1..n}) verfügen sowie - zur Kommunikation mit den zweiten Mitteln (7) über den Kommunikationskanal (8), - zum Routing von Daten weiterer Automatisierungsgeräte (5a), die über mindestens einen weiteren Client (4a) sowie einen zweiten Kommunikationskanal (8a) auf den Server (2) eingeschleust werden, zu dem Client (4) vorgesehen sind.

2. System nach Anspruch 1,
**dadurch gekennzeichnet,**
**dass** der Client (4) als Programmiergerät und/oder als Operator Panel und/oder als Diagnosegerät und/oder als Browser und/oder als Windows-CE-Gerät ausgebildet ist.

3. System nach einem der vorhergehenden Ansprüche,
**dadurch gekennzeichnet,**
**dass** der Server (2) als Terminal-Server zur simultanen Nutzung durch ein und/oder mehrere Teilnehmer ausgebildet ist.

4. System nach einem der vorhergehenden Ansprüche,
**dadurch gekennzeichnet,**
**dass** der Kommunikationskanal (8) als Remote Desktop Protocol zur Übertragung von Daten in Echtzeit über einen und/oder mehrere separate virtuelle Kanäle an einen und/oder mehrere Teilnehmer ausgebildet ist.

5. System nach einem der vorhergehenden Ansprüche,
**dadurch gekennzeichnet,**
**dass** die Übertragung von Daten im Kommunikationskanal (8) über ein Intranet und/oder ein Internet vorgesehen ist.

6. System nach einem der vorhergehenden Ansprüche,
**dadurch gekennzeichnet,**
**dass** die Übertragung von Daten vom Client (4) per Remote Desktop Protocol über ein Wireless LAN vorgesehen ist.

7. System nach einem der vorhergehenden Ansprüche,
**dadurch gekennzeichnet,**
**dass** die Übertragung von Daten per Remote Desktop Protocol von weiteren, im System (1) vorhandenen Daten-Quellen über weitere Standard-Protokolle wie HTTP und/oder FTP vorgesehen ist.

8. System nach einem der vorhergehenden Ansprüche,
**dadurch gekennzeichnet,**
**dass** das System (1) zur Nutzung über verschiedene Standorte (A, B) hinweg vorgesehen ist.

9. Verfahren zur Prozessanbindung im Automatisierungsumfeld für verteilte Engineering-Systeme, bei dem
- mindestens eine für das Engineering benötigten Anwendung (3_{1..n}) von einem Server (2) bereitgestellt wird,
- auf Prozess- und/oder Projektierungsdaten liefernde Automatisierungsgeräte (5) über mindestens einen Client (4) zugegriffen wird und
- ein für eine beliebige Dauer bestehender Online-Kommunikationskanal (8) zwischen dem Client (4) und dem Server (2) aufgebaut wird, wobei die Anwendungen (3_{1..n}) vom Client (4) online genutzt werden,
**dadurch gekennzeichnet,**
- **dass** die Daten der Automatisierungsgeräte (5) über den Kommunikationskanal (8) auf den Server (2) eingeschleust werden,
- **dass** die Anwendungen (3_{1..n}) an die Automatisierungsgeräte (5) angebunden werden und
- **dass** über erste Mittel (6) mit
- einer ersten Schnittstelle (12) zum Kommunikationskanal (8) und
- einer zweiten Schnittstelle (13) zu den Anwendungen (3_{1..n})
mit zweiten Mitteln (7) auf dem Client (4) über den Kommunikationskanal (8) kommuniziert wird und
- **dass** Daten weiterer Automatisierungsgeräte (5a) über mindestens einen weiteren Client (4a) sowie über einen zweiten Kommunikationskanal (8a) durch die ersten Mittel (6) auf den Server (2) eingeschleust und mittels Routing vom dem Server an den Client (4) übertragen werden.

10. Verfahren nach Anspruch 9,
**dadurch gekennzeichnet,**
**dass** ein Programmiergerät und/oder Operator Panel und/oder Diagnosegerät und/oder Browser und/oder Windows-CE-Gerät als Client (4) verwendet wird.

11. Verfahren nach einem der Ansprüche 9 oder 10,
**dadurch gekennzeichnet,**
**dass** ein und/oder mehrere Teilnehmer den Server (2) simultan nutzen können.

12. Verfahren nach einem der Ansprüche 9 bis 11,
**dadurch gekennzeichnet,**
**dass** als Kommunikationskanal (8) ein Remote Desktop Protocol zur Übertragung von Daten in Echtzeit über einen und/oder mehrere separate virtuelle Kanäle an einen und/oder mehrere Teilnehmer verwendet wird.

13. Verfahren nach einem der Ansprüche 9 bis 12,
**dadurch gekennzeichnet,**
**dass** Daten im Kommunikationskanal (8) über ein Intranet und/oder ein Internet übertragen werden.

14. Verfahren nach einem der Ansprüche 9 bis 13,
**dadurch gekennzeichnet,**
**dass** Daten vom Client (4) per Remote Desktop Protocol über ein Wireless LAN übertragen werden.

15. Verfahren nach einem der Ansprüche 9 bis 14,
**dadurch gekennzeichnet,**
**dass** Daten per Remote Desktop Protocol von weiteren, im System (1) vorhandenen Daten-Quellen über weitere Standard-Protokolle wie http und/oder FTP übertragen werden.

16. Verfahren nach einem der Ansprüche 9 bis 15,
**dadurch gekennzeichnet,**
**dass** das System (1) über verschiedene Standorte (A, B) hinweg genutzt wird.

17. Server zur Bereitstellung mindestens einer für ein Engineering benötigten Anwendung (3_{1..n}), wobei die Anwendungen (3_{1..n}) von einem Client (4) online nutzbar sind, mit
- Mitteln (6) zum Einschleusen von Daten von Automatisierungsgeräten (5) über einen Kommunikationskanal (8) zwischen dem Client (4) und dem Server (2), wobei die Mittel (6)
- über eine erste Schnittstelle (12) zum Kommunikationskanal (8) und
- - über eine zweite Schnittstelle (13) zu den Anwendungen (3_{1..n}) verfügen sowie
- zum Routing von Daten weiterer Automatisierungsgeräte (5a), die über mindestens einen weiteren Client (4a) sowie einen zweiten Kommunikationskanal (8a) auf den Server (2) eingeschleust werden, zu dem Client (4) vorgesehen sind.

## Claims

1. System (1) for process interfacing in the automation environment for distributed engineering systems having
- a server (2) for providing at least one application (3_{1..n}) which is required for the engineering,
- at least one client (4) for
- accessing automation devices (5) providing process and/or planning data and
- for setting up an online communication channel (8) lasting for an arbitrary period between the client (4) and the server (2), the applications (3_{1..n}) being able to be used by the client (4) online,
**characterized by**
- first means (6) for channelling data from the automation devices (5) via the communication channel (8) to the server (2) and
- second means (7) on the client (4) for interfacing the applications (3_{1..n}) to the automation devices (5),
- where the first means (6) have
- a first interface (12) to the communication channel (8) and
- a second interface (13) to the applications (3_{1..n}) and are provided
- for communication with the second means (7) via the communication channel (8) and
- for routing data from other automation devices (5a) which are channelled to the server (2) via at least one further client (4a) and a second communication channel (8a) to the client (4).

2. System according to Claim 1,
**characterized**
**in that** the client (4) is in the form of a programming device and/or in the form of an operator panel and/or in the form of a diagnosis device and/or in the form of a browser and/or in the form of a Windows CE device.

3. System according to one of the preceding claims,
**characterized**
**in that** the server (2) is in the form of a terminal server for simultaneous use by one and/or more subscriber(s).

4. System according to one of the preceding claims,
**characterized**
**in that** the communication channel (8) is in the form of a Remote Desktop Protocol for transmitting data in real time via one and/or more separate virtual channel(s) to one and/or more subscriber(s).

5. System according to one of the preceding claims,
**characterized**
**in that** provision is made for data to be transmitted in the communication channel (8) via an intranet and/or an Internet.

6. System according to one of the preceding claims,
**characterized**
**in that** provision is made for data to be transmitted from the client (4) by Remote Desktop Protocol using a wireless LAN.

7. System according to one of the preceding claims,
**characterized**
**in that** provision is made for data to be transmitted by Remote Desktop Protocol from other data sources which are present in the system (1) using other standard protocols such as HTTP and/or FTP.

8. System according to one of the preceding claims,
**characterized**
**in that** the system (1) is provided for use across various sites (A, B).

9. Method for process interfacing in the automation environment for distributed engineering systems, in which
- at least one application (3_{1..n}) required for the engineering is provided by a server (2),
- automation devices (5) providing process and/or planning data are accessed using at least one client (4), and
- an online communication channel (8) lasting for an arbitrary period is set up between the client (4) and the server (2), the applications (3_{1..n}) being used by the client (4) online,
**characterized**
- **in that** the data from the automation devices (5) are channelled via the communication channel (8) to the server (2),
- **in that** the applications (3_{1..n}) are interfaced to the automation devices (5), and
- **in that** first means (6) having
- a first interface (12) to the communication channel (8) and
- a second interface (13) to the applications (3_{1..n}) are used to communicate with second means (7) on the client (4) via the communication channel (8), and
- **in that** data from other automation devices (5a) are channelled to the server (2) via at least one further client (4a) and via a second communication channel (8a) by the first means (6) and are transmitted to the client (4) from the server by means of routing.

10. Method according to Claim 9,
**characterized**
**in that** a programming device and/or operator panel and/or diagnosis device and/or browser and/or Windows CE device is used as the client (4).

11. Method according to one of Claims 9 and 10,
**characterized**
**in that** one and/or more subscriber (s) can use the server (2) simultaneously.

12. Method according to one of Claims 9 to 11,
**characterized**
**in that** the communication channel (8) used is a Remote Desktop Protocol for transmitting data in real time via one and/or more separate virtual channel(s) to one and/or more subscriber(s).

13. Method according to one of Claims 9 to 12,
**characterized**
**in that** data are transmitted in the communication channel (8) via an intranet and/or an Internet.

14. Method according to one of Claims 9 to 13,
**characterized**
**in that** data are transmitted from the client (4) by Remote Desktop Protocol using a wireless LAN.

15. Method according to one of Claims 9 to 14,
**characterized**
**in that** data are transmitted by Remote Desktop Protocol from other data sources which are present in the system (1) using other standard protocols such as http and/or FTP.

16. Method according to one of Claims 9 to 15,
**characterized**
**in that** the system (1) is used across various sites (A, B).

17. Server for providing at least one application (3_{1..n}) which is required for engineering, the applications (3_{1..n}) being able to be used by a client (4) online, having
- means (6) for channelling data from automation devices (5) via a communication channel (8) between the client (4) and the server (2), where the means (6) have
- a first interface (12) to the communication channel (8) and
- a second interface (13) to the applications (3_{1..n}) and are provided
- for routing data from other automation devices (5a) which are channelled to the server (2) via at least one further client (4a) and a second communication channel (8a) to the client (4).

## Revendications

1. Système (1) de liaison de processus dans l'environnement d'automatisation de systèmes d'ingénierie répartis, ledit système comportant
- un serveur (2) permettant de envoyer au moins une application (3_{1...n}) nécessaire à l'ingénierie,
- au moins un client (4) pour
- accéder à des appareils d'automatisation (5) fournissant des données de projection et/ou de processus et
- réaliser un canal de communication en ligne (8), pendant une durée quelconque, entre le client (4) et le serveur (2), les applications (3_{1...n}) pouvant être utilisées en ligne par le client (4),
**caractérisé par**
- des premiers moyens (6) d'envoi des données des appareils d'automatisation (5) au serveur (2) par l'intermédiaire du canal de communication (8) et
- des deuxièmes moyens (7) sur le client (4) permettant lier les applications (3_{1...n}) aux appareils d'automatisation (5),
- les premiers moyens (6) disposant
- d'une première interface (12) avec le canal de communication (8) et
- d'une deuxième interface (13) avec les applications (3_{1...n}), et étant prévus
- pour communiquer avec les deuxièmes moyens par l'intermédiaire du canal de communication,
- pour diriger des données d'autres appareils d'automatisation (5a), qui sont envoyées au serveur (2) par l'intermédiaire d'au moins un autre client (4a) ainsi qu'un deuxième canal de communication (8a), vers le client (4).

2. Système selon la revendication 1, **caractérisé en ce que** le client (4) est conformé en appareil de programmation et/ou en tableau de commande d'opérateur et/ou en appareil de diagnostic et/ou en navigateur et/ou en appareil Windows-CE.

3. Système selon l'une des revendications précédentes, **caractérisé en ce que** le serveur (2) est conformé en serveur terminal pouvant être utilisé simultanément par un et/ou plusieurs participants.

4. Système selon l'une des revendications précédentes, **caractérisé en ce que** le canal de communication (8) est conformé en Remote Desktop Protocol permettant de transmettre des données en temps réel sur un et/ou plusieurs canaux virtuels séparés à un et/ou plusieurs participants.

5. Système selon l'une des revendications précédentes, **caractérisé en ce que** la transmission de données dans le canal de communication (8) est prévue sur un intranet et/ou un Internet.

6. Système selon l'une des revendications précédentes, **caractérisé en ce que** la transmission de données depuis le client (4) est prévu par Remote Desktop Protocol via un LAN sans fil.

7. Système selon l'une des revendications précédentes, **caractérisé en ce que** la transmission de données par Remote Desktop Protocol depuis d'autres sources de données se trouvant dans le système (1) est prévue par d'autres protocoles standards comme HTTP et/ou FTP.

8. Système selon l'une des revendications précédentes, **caractérisé en ce que** le système (1) est prévu pour être utilisé par différents sites (A, B).

9. Procédé de liaison de processus dans l'environnement d'automatisation de systèmes d'ingénierie répartis, dans lequel
- au moins une application (3_{1...n}), nécessaire à l'ingénierie, est envoyée par un serveur (2),
- on accède à des appareils d'automatisation (5), fournissant des données de projection et/ou de processus, par l'intermédiaire d'au moins un client (4) et
- un canal de communication en ligne (8) d'une durée quelconque est établi entre le client (4) et le serveur (2), les applications (3_{1...n}) étant utilisées en ligne par le client (4),
**caractérisé en ce que**
- les données des appareils d'automatisation (5) sont envoyées au serveur (2) par le canal de communication (8),
- les applications (3_{1...n}) sont liées aux appareils d'automatisation (5) et
- des premiers moyens (6) comportant
- une première interface (12) avec le canal de communication (8) et
- une deuxième interface (13) avec les applications(3_{1...n}) communiquent avec des deuxièmes moyens (7) sur le client (4) par l'intermédiaire du canal de communication (8) et
- des données d'autres appareils d'automatisation (5a) sont envoyées au serveur (2) par au moins un autre client (4a) ainsi que par un deuxième canal de communication (8) par le biais des premiers moyens (6) et sont transmises au client (4) en étant dirigées depuis le serveur.

10. Procédé selon la revendication 9, **caractérisé en ce que** l'on utilise comme client (4) un appareil de programmation et/ou un tableau de commande d'opérateur et/ou un appareil de diagnostic et/ou un navigateur et/ou un appareil Windows-CE.

11. Procédé selon l'une des revendications 9 ou 10, **caractérisé en ce qu'**un et/ou plusieurs participants peuvent utiliser simultanément le serveur (2).

12. Procédé selon l'une des revendications 9 à 11, **caractérisé en ce que** l'on utilise comme canal de communication (8) un Remote Desktop Protocol permettant de transmettre des données en temps réel sur un et/ou plusieurs canaux virtuels séparés à un et/ou plusieurs participants.

13. Procédé selon l'une des revendications 9 à 12, **caractérisé en ce que** des données sont transmises dans le canal de communication (8) sur un intranet et/ou un Internet.

14. Procédé selon l'une des revendications 9 à 13, **caractérisé en ce que** des données sont transmises depuis le client (4) par Remote Desktop Protocol via un LAN sans fil.

15. Procédé selon l'une des revendications 9 à 14, **caractérisé en ce que** des données sont transmises par Remote Desktop Protocol depuis d'autres sources de données, se trouvant dans le système (1), par d'autres protocoles standards comme HTTP et/ou FTP.

16. Procédé selon l'une des revendications 9 à 15, **caractérisé en ce que** le système (1) est utilisé par différents sites (A, B).

17. Serveur permettant de envoyer au moins une application (3_{1...n}) nécessaire à une ingénierie, les applications (3_{1...n}) pouvant être utilisées en ligne par un client (4), le serveur comportant
- des moyens (6) permettant d'envoyer des données d'appareils d'automatisation (5) par l'intermédiaire d'un canal de communication (8) entre le client (4) et le serveur (2), les moyens (6) disposant
- d'une première interface (12) avec le canal de communication (8) et
- d'une deuxième interface (13) avec les applications (3_{1...n}), et étant prévus
- pour diriger des données d'autres appareils d'automatisation (5a), qui sont envoyées au serveur (2) par l'intermédiaire d'au moins un autre client (4a) ainsi qu'un deuxième canal de communication (8a), vers le client (4).
